# FASCICULE DE BREVET EUROPEEN

(11) **EP 0 516 499 B1**
(45) Date de publication et mention de la délivrance du brevet: **18.10.1995**
(21) Numéro de dépôt: 92401260.2
(22) Date de dépôt: 05.05.1992
(51) Int. Cl.: B29C 70/26, B29C 43/00, B44F 9/04

(54) **Procédé de fabrication d'une pièce ayant l'aspect d'une pierre naturelle par moulage d'une composition contenant une résine thermodurcissable et pièce obtenue par ce procédé**
Verfahren zur Herstellung eines Gegenstandes mit dem Aussehen natürlichen Steins durch Giessen einer vernetzbaren Kunststoff enthaltenden Mischung und damit hergestellter Gegenstand
Process for manufacturing an object having the appearance of natural stone by moulding a composition containing a thermosetting resin, and object obtained

(30) Priorité: 27.05.1991 FR 9106329
(43) Date de publication de la demande: 02.12.1992
(73) Titulaire: L'OREAL, 75008 Paris (FR)
(72) Inventeur: Gueret, Jean-Louis, F-75018 Paris (FR)
(74) Mandataire: Peuscet, Jacques

(56) Documents cités:
- BE-A- 898 289
- DE-C- 932 954
- GB-A- 1 156 205
- US-A- 4 137 215

## Description

La présente invention concerne un procédé de fabrication d'une pièce ayant l'aspect d'une pierre naturelle par moulage d'une composition contenant une résine thermodurcissable et une pièce obtenue par ce procédé.

Il est déjà connu de préparer des pièces ayant l'aspect de pierre à partir de mélanges de résine thermodurcissable et de charges : dans BE-A 898 289, on décrit la fabrication de pièces moulées en "béton de résine" contenant moins de 12 % en poids de résine thermodurcissable comme liant. Cependant, il est difficile, par moulage d'un béton de résine, d'obtenir des pièces ne comportant pas de microbulles, or, les microbulles donnent au produit un aspect inesthétique. Pour éviter cet inconvénient, il est possible de n'utiliser que des charges sphériques mais on limite ainsi les charges utilisables ; en particulier, on ne peut plus, dans ce cas, utiliser des fibres naturelles. De plus, les pièces obtenues sont relativement fragiles et il est difficile de préparer des pièces minces.

La présente invention concerne un procédé qui permet de préparer des pièces ayant l'aspect de pierre naturelle par moulage de compositions contenant une résine thermodurcissable, sans avoir les inconvénients ci-dessus indiqués. Ce procédé a de plus l'avantage de permettre d'obtenir des pièces d'aspect homogène sans marbrures ni traînées.

La présente invention a pour objet un procédé de préparation d'une pièce ayant l'aspect d'une pierre naturelle, par mise en forme d'une composition contenant au moins une résine thermodurcissable et au moins une charge, caractérisé par le fait que l'on mélange, d'une part, des particules d'au moins une résine thermodurcissable et, d'autre part, au plus 30 % en poids par rapport au poids total de la composition d'au moins une charge particulaire choisie parmi les fibres naturelles, les charges minérales et leurs mélanges, ayant des dimensions particulaires maximales (granulométrie) comprises entre 30 micromètres et 4 mm ; que l'on introduit le mélange dans un moule femelle porté à une température comprise entre 120 et 160°C ; que l'on comprime progressivement le mélange dans le moule femelle par un noyau mâle chaud assurant la fermeture du moule femelle, à une pression suffisante pour obtenir le filage de la composition dans tout l'espace compris entre le noyau mâle et le moule femelle ; qu'on laisse durcir la résine utilisée en maintenant la température, sous une pression suffisante pour assurer la fermeture du moule ; et qu'après ouverture du moule, on démoule la pièce ainsi obtenue.

De préférence, la température du noyau mâle est comprise entre 120 et 160°C et voisine de celle du moule femelle ; le temps de durcissement est généralement compris entre 30 secondes et 3 minutes; l'enfoncement du noyau mâle dans le moule femelle jusqu'à fermeture du moule s'effectue sous une pression, qui croît jusqu'à une valeur maximum comprise entre 10⁸ et 5 x 10⁹ pascals en un temps compris entre 3 et 60 secondes.

Selon la présente invention, la résine thermodurcissable utilisée est une résine phénolique, par exemple la résine vendue sous la dénomination commerciale "BAKELITE", ou une aminorésine, en particulier une mélamine ou une résine urée-formol. De façon connue, différents initiateurs ou catalyseurs peuvent être associés à la résine thermodurcissable mise en oeuvre. La résine est avantageusement mise en oeuvre sous forme de granulés ou de billes ayant des dimensions comprises entre 0,05 et 3 mm. La résine thermodurcissable incorporée peut être colorée ou non : elle peut être introduite sous forme de particules blanches, incolores ou teintées (en ocre, bleu, gris ou beige, par exemple).

Selon l'invention, on utilise de préférence une seule résine thermodurcissable ; si on met en oeuvre simultanément des résines de couleurs différentes, celles-ci ne se mélangent pas mais forment, au filage, des taches séparées , dont l'aspect est difficile à contrôler et à reproduire et s'insère mal dans la recherche de la ressemblance avec la pierre naturelle.

Les fibres naturelles mises en oeuvre, selon l'invention, sont notamment choisies dans le groupe formé par les fibres de cellulose ou de lignocellulose, telles que les fibres de bois (poussière de bois ou sciure), les fibres de coton, les fibres de lin, les fibres de maïs, de liane, de coco, de banane ou la poudre de liège ; les fibres utilisées sont choisies parmi celles résistant à la température de moulage. Les fibres mises en oeuvre, selon l'invention, présentent avantageusement un diamètre compris entre 0,7 micromètre et 300 micromètres et une longueur comprise entre 30 micromètres et 4 mm. Lorsqu'on utilise une charge comprenant des fibres de dimensions différentes, les fibres de plus faible dimension ont avantageusement une longueur comprise entre 30 micromètres et 2 mm et les fibres de plus grande dimension, une longueur comprise entre 2 mm et 4 mm.

Les charges minérales utilisées sont, notamment choisies dans le groupe formé par le carbonate de calcium, le sulfate de calcium, l'oxyde de zinc, le carbonate de zinc, l'oxyde de magnésium, l'hydroxyde de magnésium, les silicates de magnésium, comme le talc et les silicoaluminates, comme le mica ou le verre, sous forme de fibres ou de microbilles. On utilise, de préférence, des charges minérales, dont la granulométrie est comprise entre 30 micromètres et 0,2 mm environ.

Les fibres naturelles ou les charges minérales peuvent être colorées ou non. La coloration des charges peut être obtenue par imprégnation avec une solution d'un colorant soluble, en particulier hydrosoluble. La coloration des charges peut également être obtenue par centrifugeage ou turbinage avec des colorants en poudre ou des peintures acrylique ou vinylique de la couleur choisie.

Selon l'invention, on utilise, de préférence, comme charge particulaire au moins deux composants de granulométries ou dimensions différentes; les composants utilisés peuvent être constitués uniquement par des fibres naturelles ou uniquement par des charges minérales ; mais le plus souvent, on utilise un mélange de composants contenant, à la fois, au moins une fibre naturelle et au moins une charge minérale.

On utilise avantageusement trois composants de granulométries ou dimensions différentes. Le composant de granulométrie la plus fine est, de préférence, une charge minérale tandis que les deux autres composants sont des fibres naturelles. Dans ce dernier cas, par exemple, lorsqu'on utilise, comme charge minérale, du talc, teinté ou non, et, comme fibres naturelles, de la poussière de bois, teintée ou non, ayant des dimensions comprises entre 200 et 300 micromètres et de la sciure de bois, teintée ou non, de plus grande dimension, on obtient une pièce moulée dans laquelle la charge minérale forme un fond de couleur unie, moucheté par la poussière de bois, la surface de la pièce étant "animée" par la sciure de bois.

Dans le procédé selon l'invention, l'étape de mélange de la composition moulée peut être effectuée dans tout mélangeur, par exemple dans un mélangeur de type "tonneau" ou, de préférence, dans une boudineuse à vis. Le mélange est ensuite stocké dans une trémie, le temps de stockage n'étant pas limité à température ambiante car la réaction de durcissement de la résine thermodurcissable ne peut pas avoir lieu à cette température.

Pour le moulage, on introduit des quantités dosées de composition de moulage dans le moule femelle préchauffé à une température comprise entre 120 et 160°C. On ferme le moule femelle avec le noyau mâle, qui est lui-même préchauffé à une température comprise entre 120 à 160°C. Sous l'action du noyau mâle, le mélange subit une compression croissante, qui s'établit pour finir, à une valeur de 8.10⁸ pascals.

De préférence, on applique lentement la pression dans le moule, la pression maximum étant atteinte en un temps compris entre 3 et 60 secondes après le début de compression. On maintient les conditions de température et de pression définies ci-dessus pendant 30 secondes à 3 minutes suivant l'épaisseur de la pièce moulée et la nature de la composition de moulage utilisée.

La pièce est ensuite démoulée et, éventuellement ébarbée.

On a trouvé que, dans les conditions définies ci-dessus, les particules de la charge se répartissent sans formation de trainées, de façon homogène, dans le moule et sans qu'il y ait d'intéraction entre la couleur de la résine thermodurcissable utilisée et celle des particules de charges teintées. On obtient donc une pièce ayant un aspect globalement homogène sur toute sa surface.

Selon l'aspect de brillance ou de matité que l'on désire donner à la pièce, on peut utiliser des moules différents. On peut, par exemple, employer des moules légèrement dépolis pour donner un aspect légèrement mat à la pièce et renforcer sa ressemblance avec une pierre. Si on désire obtenir une pièce brillante, on peut déposer un "gel-coat" sur les parois internes du moule avant l'introduction du mélange dans le moule.

La présente invention a également pour objet une pièce moulée ayant l'aspect d'une pierre naturelle, susceptible d'être obtenue par la mise en oeuvre du procédé tel que ci-dessus défini. Ces pièces sont, notamment, destinées à la fabrication de conditionnements ou d'accessoires de conditionnement pour produits cosmétiques, tels que flacons, bouchons, capuchons, boîtiers et analogues.

Pour mieux faire comprendre l'objet de la présente invention, on va en décrire maintenant, à titre d'exemples purement illustratifs et non limitatifs, plusieurs modes de mise en oeuvre.

### EXEMPLE 1

On prépare, dans une boudineuse à vis ou dans un fourreau, un mélange ayant la formulation suivante :

| | |
|---|---|
| - Résine urée-formol blanche sous forme de granulés ayant une dimension particulaire de 0,1 à 1 mm | 1 000 parties |
| - Sciure de bois naturel beige ayant une dimension particulaire de 60 µm | 4 parties |
| - Sciure de bois rose ayant une dimension particulaire de 300 µm | 1,7 partie |
| - Sciure de bois marron ayant une dimension particulaire de 300 µm | 1,7 partie |
| - Sciure de bois bleue ayant une dimension particulaire de 1 mm | 0,5 partie |

Les particules de sciure ont été colorées par imprégnation à l'aide d'un colorant hydrosoluble.

Le mélange sortant de la boudineuse alimente une trémie. On introduit ensuite 70 g du mélange dans un moule femelle ayant les caractéristiques suivantes:
- surface interne dépolie,
- empreinte de 50 x 50 x 22 mm,
- préchauffage à une température de 140°C.

On met en place sur le mélange un noyau mâle, préchauffé également à 140°C ; on comprime le noyau sur le mélange mis en place, la pression dans le moule s'élevant à 8.10⁸ pascals en une minute. Le moule se trouve alors fermé ; on maintient la pression et la température pendant un temps d'environ deux minutes pour obtenir un durcissement complet de la résine. On ouvre ensuite le moule et on ébarbe la pièce obtenue à l'aide d'un couteau d'ébarbage.

On obtient une pièce ayant un fond blanc dans laquelle sont uniformément réparties des particules roses, bleues, beiges et marrons.

### EXEMPLE 2

On prépare, comme dans l'exemple 1, une pièce à partir d'un mélange ayant la formulation suivante:

| | |
|---|---|
| - Résine urée-formol beige sous forme de granulés ayant une dimension particulaire de 0,6 mm | 1 000 parties |
| - Sciure de bois beige naturel ayant une dimension particulaire de 60 µm | 20 parties |
| - Sciure de bois rose ayant une dimension particulaire de 300 µm | 1,5 partie |
| - Sciure de bois beige naturel ayant une dimension particulaire de 200 µm | 1,5 partie |
| - Sciure de bois bleue ayant une dimension particulaire de 500 µm | 0,5 partie |
| - Sciure de bois rouge ayant une dimension particulaire de 60 µm | 1 partie |
| - Sciure de bois marron ayant une dimension particulaire de 300µm | 1 partie |
| - Résine urée-formol blanche sous forme de poudre ayant une granulométrie de 1 mm | 13 parties |

On obtient une pièce, dont le fond est beige formant un fondu subtil des différentes couleurs et granulométries conférant à la pièce de la profondeur et de la densité ; cette pièce est piquetée de points blancs, rouges, bleus, roses, violets, marrons et beiges. Les charges minérales ou les fibres naturelles sont teintées dans la pièce moulée de façon indélébile au contact de toutes sortes de solvants.

### EXEMPLE 3

On prépare comme dans l'exemple 1 une pièce à partir d'un mélange ayant la formulation suivante :

| | |
|---|---|
| - Résine urée-formol beige sous forme de granulés ayant une dimension particulaire de 0,6 mm | 1 000 parties |
| - Sciure de bois beige naturel ayant une dimension particulaire de 60 µm | 20 parties |
| - Particules de mica roses (peintes) ayant une dimension particulaire de 200 µm | 1,5 partie |
| - Particules de mica bleues (peintes) ayant une dimension particulaire de 500 µm | 0,5 partie |
| - Sciure de bois rouge ayant une dimension particulaire de 300 µm | 1 partie |
| - Particules de mica marron (peintes) ayant une dimension particulaire de 300 µm | 1 partie |
| - Particules de mica blanches sous forme de poudre ayant une granulométrie de 1 mm | 13 parties |

On obtient une pièce, dont le fond est beige formant un fondu subtil des différentes couleurs et granulométries conférant à la pièce de la profondeur et de la densité ; cette pièce est piquetée de points blancs, rouges, bleus, roses, violets, marrons et beiges. Les charges minérales ou les fibres naturelles sont teintées dans la pièce moulée de façon indélébile au contact de toutes sortes de solvant.

### EXEMPLE 4

On prépare comme dans l'exemple 1 une pièce à partir d'un mélange ayant la formulation suivante :

| | |
|---|---|
| - Résine urée-formol beige ayant une dimension particulaire de 0,6 mm | 1 000 parties |
| - Particules de mica beiges plus clairs que la résine urée-formol ayant une dimension particulaire de 60 µm | 20 parties |
| - Particules de mica blanches ayant une granulométrie de 1 mm | 13 parties |

On obtient ainsi une pièce beige chinée comportant un certain nombre de points blancs ayant un aspect très proche de la pierre.

## Revendications

1. Procédé de préparation d'une pièce ayant l'aspect d'une pierre naturelle, par mise en forme d'une composition contenant au moins une résine thermodurcissable et au moins une charge, caractérisé par le fait que l'on mélange, d'une part, des particules d'au moins une résine thermodurcissable et, d'autre part, au plus 30 % en poids par rapport au poids total de la composition d'au moins une charge particulaire choisie parmi les fibres naturelles, les charges minérales et leurs mélanges, ayant des dimensions particulaires maximales comprises entre 30 micromètres et 4 mm ; que l'on introduit le mélange dans un moule femelle porte à une température comprise entre 120 et 160°C ; que l'on comprime progressivement le mélange dans le moule femelle par un noyau mâle chaud assurant la fermeture du moule femelle, à une pression suffisante pour obtenir le filage de la composition dans tout l'espace compris entre le noyau mâle et le moule femelle ; qu'on laisse durcir la résine utilisée en maintenant la température, sous une pression suffisante pour assurer la fermeture du moule ; et qu'après ouverture du moule, on démoule la pièce ainsi obtenue.

2. Procédé selon la revendication 1, caractérisé par le fait que l'on utilise, comme résine thermodurcissable, une résine phénolique ou une aminorésine.

3. Procédé selon l'une des revendications 1 ou 2 , caractérisé par le fait que l'on utilise, comme fibres naturelles, des fibres de cellulose ou de lignocellulose.

4. Procédé selon l'une des revendications 1 à 3, caractérisé par le fait que l'on utilise une charge minérale choisie dans le groupe forme par le carbonate de calcium, le sulfate de calcium, l'oxyde de zinc, le carbonate de zinc, l'oxyde de magnésium, l'hydroxyde de magnésium, les silicates de magnésium et les silicoaluminates.

5. Procédé selon la revendication 4, caractérisé par le fait qu'on utilise des charges minérales, dont la granulométrie est comprise entre 30 micromètres et 0,2 mm.

6. Procédé selon l'une des revendications 1 à 5, caractérisé par le fait qu'au mois un composant de la charge particulaire est coloré par imprégnation par un colorant soluble ou par revêtement avec une peinture de la couleur choisie.

7. Procédé selon l'une des revendications 1 à 6, caractérisé par le fait que l'on utilise au moins deux charges, de préférence au moins trois charges, de granulométries ou dimensions différentes.

8. Procédé selon l'une des revendications 1 à 7, caractérisé par le fait que l'on utilise un moule légèrement dépoli.

9. Procédé selon l'une des revendications 1 à 8, caractérisé par le fait que l'on dépose un revêtement sur les parois internes du moule avant introduction du mélange à mouler.

10. Pièce ayant l'aspect d'une pierre naturelle susceptible d'être obtenue par le procédé selon l'une des revendications 1 à 9.

## Claims

1. Process for preparing an object having the appearance of natural stone, by shaping a composition containing at least one thermosetting resin and at least one filler, characterized in that a mixture is made, on the one hand, of particles of at least one thermosetting resin and, on the other hand, at most 30% by weight with respect to the total weight of the composition of at least one particulate filler chosen from natural fibres, mineral fillers and their mixtures, having maximum particulate dimensions of between 30 micrometres and 4 mm; in that the mixture is introduced into a female mould raised to a temperature of between 120 and 160°C; in that the mixture is progressively compressed in the female mould by a hot male core ensuring closure of the female mould, at a pressure sufficient to extrude the composition into the entire space lying between the male core and the female mould; in that the resin used is left to set, while maintaining the temperature, under a pressure sufficient to ensure closure of the mould; and in that, after opening the mould, the object thus obtained is demoulded.

2. Process according to Claim 1, characterized in that a phenolic resin or an amino resin are used as the thermosetting resin.

3. Process according to one of Claims 1 and 2, characterized in that cellulose or lignocellulose fibres are used as the natural fibres.

4. Process according to one of Claims 1 to 3, characterized in that a mineral filler, chosen from the group formed by calcium carbonate, calcium sulphate, zinc oxide, zinc carbonate, magnesium oxide, magnesium hydroxide, magnesium silicates and aluminium silicates, is used.

5. Process according to Claim 4, characterized in that mineral fillers are used whose particle size is between 30 micrometres and 0.2 mm.

6. Process according to one of Claims 1 to 5, characterized in that at least one component of the particulate filler is coloured by impregnating with a soluble colorant or by coating with a paint of the chosen colour.

7. Process according to one of Claims 1 to 6, characterized in that at least two fillers, preferably at least three fillers, of different particle sizes or dimensions are used.

8. Process according to one of Claims 1 to 7, characterized in that a slightly roughened mould is used.

9. Process according to one of Claims 1 to 8, characterized in that a coating is deposited on the internal walls of the mould before introducing the mixture to be moulded.

10. Object having the appearance of natural stone able to be obtained by the process of claims 1 to 9.

## Patentansprüche

1. Verfahren zur Herstellung eines Gegenstandes mit dem Aussehen von Naturstein durch Formen einer Zusammensetzung, welche wenigstens ein wärmehärtbares Harz und wenigstens einen Füllstoff enthält, dadurch gekennzeichnet, daß man einerseits Partikel wenigstens eines wärmehärtbaren Harzes und andererseits höchstens 30 Gew.-%, bezogen auf das Gesamtgewicht der Zusammensetzung, wenigstens eines partikelförmigen Füllstoffs, ausgewählt unter Naturfasern, mineralischen Füllstoffen und Gemischen davon, mit maximalen Partikelabmessungen im Bereich von 30 Mikrometern bis 4 mm mischt; daß man das Gemisch in eine aufnehmende Form einführt, welche auf eine Temperatur im Bereich von 120 bis 160° C gebracht wurde; daß man das Gemisch in der aufnehmenden Form mit Hilfe eines erhitzten Stempels, der die aufnehmende Form verschließt, allmählich bei einem Druck komprimiert, der ausreicht, um die Zusammensetzung im gesamten Bereich zwischen Stempel und aufnehmender Form zu vernetzen; daß man das verwendete Harz durch Beibehaltung der Temperatur unter einem Druck aushärten läßt, der ausreicht, um ein Verschließen der Form sicherzustellen; und daß man nach dem Öffnen der Form den auf diese Weise erhaltenen Gegenstand löst.

2. Verfahren nach Anspruch 1, dadurch gekennzeichnet, daß man als wärmehärtbares Harz ein Phenolharz oder ein Aminoharz verwendet.

3. Verfahren nach einem der Ansprüche 1 oder 2, dadurch gekennzeichnet, daß man als Naturfasern Cellulosefasern oder Lignocellulosefasern verwendet.

4. Verfahren nach einem der Ansprüche 1 bis 3, dadurch gekennzeichnet, daß man einen mineralischen Füllstoff verwendet, der ausgewählt ist unter Calciumcarbonat, Calciumsulfat, Zinkoxyd, Zinkcarbonat, Magnesiumoxyd, Magnesiumhydroxyd, Magnesiumsilicaten und Silicoaluminaten.

5. Verfahren nach Anspruch 4, dadurch gekennzeichnet, daß man mineralische Füllstoffe verwendet, deren Korngröße im Bereich von 30 Mikrometern bis 0,2 mm liegt.

6. Verfahren nach einem der Ansprüche 1 bis 5, dadurch gekennzeichnet, daß wenigstens eine Komponente des partikelförmigen Füllstoffs durch Imprägnierung mit einem löslichen Farbstoff oder durch Überziehen mit einem Anstrich der gewünschten Farbe gefärbt ist.

7. Verfahren nach einem der Ansprüche 1 bis 6, dadurch gekennzeichnet, daß man wenigstens zwei Füllstoffe, vorzugsweise wenigstens drei Füllstoffe, unterschiedlicher Teilchengröße verwendet.

8. Verfahren nach einem der Ansprüche 1 bis 7, dadurch gekennzeichnet, daß man eine leicht mattierte Form verwendet.

9. Verfahren nach einem der Ansprüche 1 bis 8, dadurch gekennzeichnet, daß man auf den Innenwänden der Form vor Einführung des zu formenden Gemisches einen Überzug aufbringt.

10. Gegenstand mit dem Aussehen von Naturstein, erhältlich mit Hilfe eines Verfahrens gemäß einem der Ansprüche 1 bis 9.
